# DEMANDE DE BREVET EUROPEEN

(11) **EP 2 306 146 A1**
(43) Date de publication de la demande: **06.04.2011**
(21) Numéro de dépôt: 10011990.8
(22) Date de dépôt: 30.09.2010
(51) Int. Cl.: G01B 11/02, G01B 11/06, G01B 11/245, G01B 11/30, A21C 9/08, B25J 9/16, G01N 21/88

(54) **Procédé et installation de controle de qualité sur des produits de boulangerie industrielle**

(30) Priorité: 30.09.2009 FR 0904673
(71) Demandeur: De La Ballina Frères, 12350 Maleville (FR)
(72) Inventeur: de Chilly, Benjamin, 12200 La Bastide L'éveque (FR); Dumas, Emmanuel, 12200 Villefranche de Rouergue (FR); de Lazzari, Thierry, 82130 Honor de Cos (FR); Madaule, Christian, 81440 Jonquières (FR)
(74) Mandataire: Thibon, Norbert

(57) **Abrégé**

Dans une installation de boulangerie industrielle, le contrôle de qualité est effectué par un procédé suivant lequel on soumet des produits de boulangerie encore contenus dans les alvéoles d'une plaque de moulage les recevant individuellement à un examen de visiométrie par le dessus fournissant des informations d'imagerie numériques au moins quant à leur localisation dans la plaque correspondante, pour commander automatiquement leur saisie au moyen de différents préhenseurs d'une matrice de préhenseurs (notamment des préhenseurs à ventouses ou à aiguilles à commande pneumatique), afin de les soumettre à un autre examen de visiométrie qui est effectué par le dessous alors que les produits sont suspendus à la matrice de préhenseurs.

## Description

L'invention concerne le contrôle de produits dans une chaîna de fabrication industrielle. Elle s'applique de manière spécialement avantageuse au contrôle de produits sortis de cuisson dans des conditions telles que celles que l'on rencontre, en particulier, dans le domaine de la boulangerie industrielle, quand on procède à un contrôle de qualité par visiométrie avant d'exclure du circuit de conditionnement les produits qui ne respectent pas des exigences de formes ou d'aspect prédéterminées.

C'est dans le cadre de cette application, qui n'est toutefois pas limitative, que la Déposante a déjà décrit la technologie SOUS différentes formes, dans les descriptions des brevets et demandes de brevet dont elle est titulaire.

Dans ceux-ci comme dans le cas présent, on entend par visiométrie la technique qui consiste à prendre des images numériques des produits à examiner sous éclairage par un faisceau laser, et à soumettre les images saisies à un traitement d'images numériques calculant automatiquement les informations de formes et d'aspect à comparer aux seuils de qualité prédéterminés et produisant automatiquement des signaux de commande de tri en fonction de la comparaison effectuée pour chaque produit. Pour préciser la présente description en cas de besoin, on pourra notamment se reporter aux demandes de brevets publiées sous les numéros FR 2 860 581, FR 2 929 481, FR 2 929 405, FR 2 929 257 et FR 2 939 769.

Dans les texte auxquels on vient de faire référence, on s'e:;t surtout intéressé à des systèmes de visiométrie ayant à examiner des produits qui sont entraînés à défiler en continu à travers le pos;e de visiométrie, dans le champ de vision d'une ou plusieurs caméras de saisie d'images numériques. Les images sont acquises ce manière répétitive au cours du déplacement relatif entre chaque produit et le champ de vision éclairé, qu'il s'agisse de caméras linéaires ou de caméras matricielles. Comme il ressort des textes ce brevet en question, les systèmes qui y sont décrits sont surtout préconisés pour le traitement des produits qui parviennent en vrac sur le tapis du convoyeur de transport à travers le poste de visiométrie pour en sortir triés en fonction d'informations de qualité et/ou de comptage qui sont élaborées par traitement numérique à partir des images acquises.

Dans les cas d'appiication les plus courants, la technique est utilisée sur des produits cuits ou semi cuits à l'état congelé qui sortent d'un surgélateur et qui sont dirigés vers des bacs de réception différents suivant qu'ils sont conformes ou non conformes aux exigences de qualité ou triés en lots successifs contenant chacun un nombre prédéterminé de produits jugés conformes à de telles exigences en vue de leur conditionnement pour livraison.

La présente invention s'intéresse préférentiellement, bien que non limitativement, au contrôle de qualité de produits parvenant correctement rangés aux moyens d'examen par visiométrie. Elle se traduit par différentes caractéristiques, que l'on peut mettre en oeuvre chacune séparément ou les unes avec les autres en toute combinaison techniquement opérante.

L'invention a notamment pour objet un procédé de contrôle de qualité dans une installation de boulangerie industrielle, tel que défini par la revendication 1 ou par toute revendication en dépendant.

Naturellement l'invention a également pour objet une installation comportant tous moyens appropriés pour la mise en oeuvre du procédé. Une telle installation est définie par la revendication 3 ou par toute revendication en dépendant.

Les diverses caractéristiques propres à la présente invention seront détaillées ci-après, ce parfois sous différentes variantes, étant entendu que la description détaillée de variantes ne saurait être limitative des formes de mise en oeuvre que peuvent prendre e procédé et l'installation sans sortir pour autant du cadre ce l'invention.

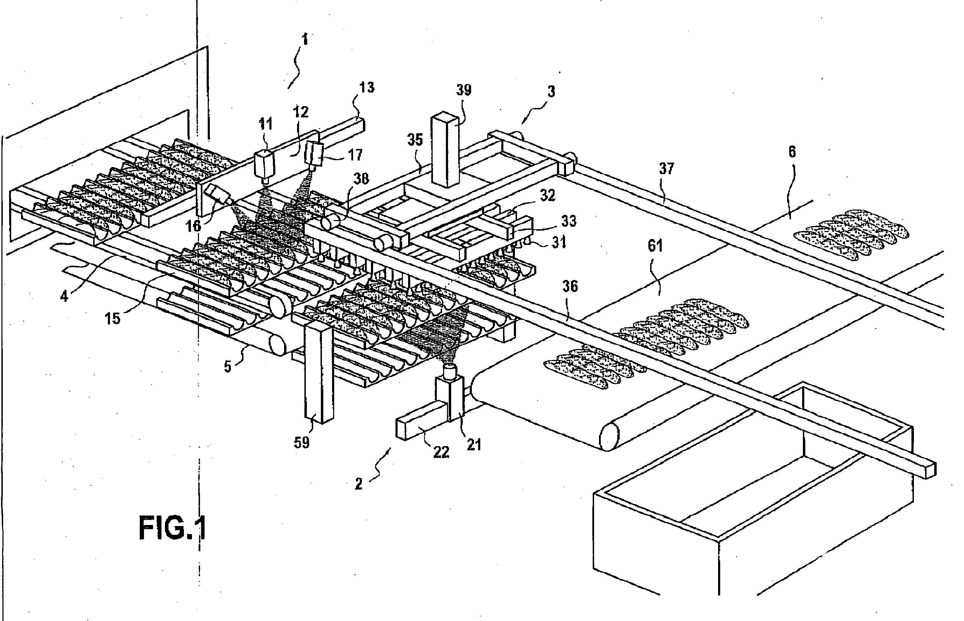

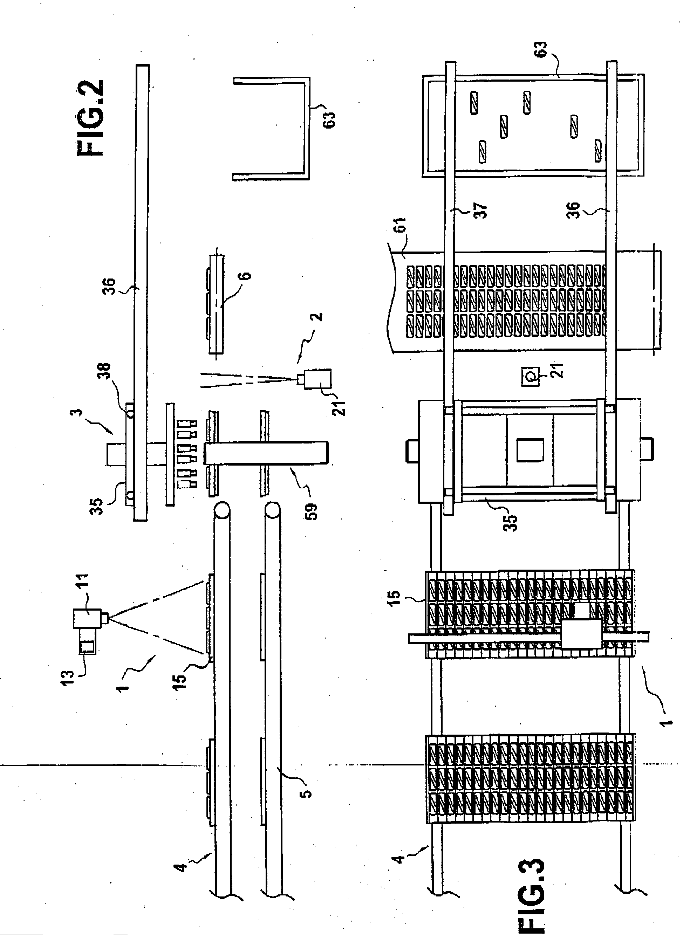

La constitution d'une installation réalisée conformément à l'invention est illustrée par les figures des dessins annexées dans lesquelles :
- En figure 1; on trouve une représentation schématique des. différents éléments essentiels de l'appareillage dans une vue en perspective ;
- En figure 2, on a schématiquement représenté la même installation vue en élévation,
- tandis qu'en parallèle la figure 3 l'illustre dans une vue en plan.
- La figure 4 représente une plaque de cuisson à alvéoles creusées pour le moulage de pains de forme allongée, du type des baguettes.
- La figure 4A en est un détail faisant ressortir la présence des plats entre alvéoles qui sont utilisés pour vérifier la planéité des plaques avant de les remettre en circuit pour une nouvelle cuisson.
- La figure 5 illustre schématiquement, en vue en plan, la constitution d'une matrice de préhension à préhenseurs multiples pour le transport de produits suspendus.
- La figure 5A montre en montre une partie vue en élévation, au niveau de la fixation d'un couple de préhenseurs.
- Les figures 6A et 6B illustrent le fonctionnement de l'un des préhenseurs dans le cas d'un système de préhension à aiguilles.

L'installation illustrée par les figures 1, 2 et 3 est décrite dans le cadre de son application au contrôle de qualité sur des produis de boulangerie industrielle qui sont cuits dans des moules.

Suivant une caractéristique de la présente invention, l'examen des produits par visiométrie est effectué au moment du démoulage de produits qui quittent le four de cuisson. Dans le métier, l'opération de démoulage est appelée déplacage, car les moules ce produits individuels sont ménagés par des alvéoles creusées en distribution régulière dans des plaques de cuisson, qui sort entraînées hors du poste de cuisson par des convoyeurs s:jr lesquelles elles sont déposées en série l'une après l'autre.

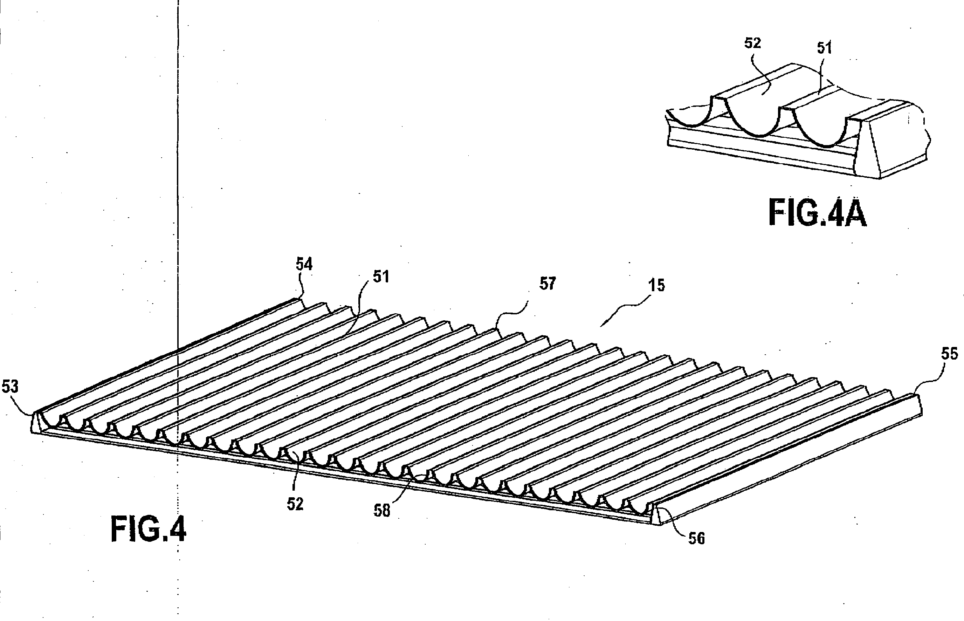

Dans le cas particulier considéré, une telle plaque de cuisson est illustrée par la figure 4. Dans cette figure, comme dans les figures 1 et 3, on observe que les alvéoles sont ménagées en creux sur toute la largeur de la plaque, toutes équidistantes et parallèles dans le sens de transport du convoyeur les amenant depuis le poste de cuisson. En pratique, ces plaques sont utilisées pour des pains en forme de baguettes, .soit en forme de baguettes françaises traditionnelles complètes, soit en forme de fractions de baguettes comme illustré sur la figure 3 pour des tiers de baquette traditionnelle.

Conformément également à l'une des caractéristiques de l'invention, l'examen par visiométrie est effectué dans deux postes de visiométrie qui se succèdent dans le sens de défilement des plaques contenant les produits sortant de cuisson. Le premier poste de visiométrie, 1 examine les produits par le dessus alors qu'ils sort encore contenus dans les plaques de cuisson. Le second poste de visiométrie, portant le référence 2 sur les figures, examine les produits eux-mêmes par ie dessous alors qu'ils viennent juste d'être extraits de leurs alvéoles de réception respectives et qu'ils sort suspendus à un système de transport 3.

Ce système de transport, tel qu'il est prévu dans les modes de réalisation des figures 1 à 3, est supposé être composé par une matrice de préhenseurs à ventouse, telle que celle qui a été décrite dans les demandes de brevet de la Déposante FR 2 929 405 ET FR 2 929 257. On y a décrit non seulement la constitution mécanique des préhenseurs individuels et de leur regroupement en lignes et colonnes dans la matrice, mais aussi le système informatique de traitement des données qui élabore automatiquement les ordres de commande des préhenseurs individuels à partir des informations enregistrées par acquisition des images numériques prises à un poste de visiométrie situé en amont. On y a aussi amplement décrit le système de transport de produits suspendus par des préhenseurs à ventouse dans le cas où il est utilisé en aval d'un poste ce visiométrie examinant les produits par le dessus pour les faire passer suspendus à travers un poste de visiométrie les examinant par le dessous. Les opérations d'acquisition d'images s'effectuaient alors pendant que les produits défilaient sous un ensemble fixe d'éclairage laser et caméra(s) de prise de vues.

Dans le présent cas d'application de l'invention, le poste de visiométrie 1 opère sur des produits encore dans les alvéoles de la plaque de cuisson alors que celle-ci est arrêtée immobile sur le convoyeur d'entrée 4. Dans le mode de réalisation particulier décrit on a préféré, de ce fait, utiliser un ensemble d'acquisition d'images à balayage. C'est ainsi que la figure 1 illustre schématiquement le fait que la caméra laser est montée sur un chariot mobile 12, lequel est entraîné (par des moyens de motorisation non représentés) à se déplacer le long d'une poutre 13 qui le guide en translation transversalement au convoyeur de transport des plaques. En fonctionnement, on effectue donc la saisie d'images produit par produit (les baguettes sont observées l'une après l'autre) au cours du déplacement de la caméra au-dessus de la plaque immobile, d'un bord à l'autre du convoyeur.

La figure 1 montre encore que dans l'appareillage de prise de vue, le laser d'éclairage 11 émet un faisceau planaire, et que, sur la plaque en cours de traitement 15 et les produits qu'elle contient, le plan d'éclairage laser s'étend sur toute la longueur de la largeur de la plaque dans le sens longitudinal du convoyeur.

Par ailleurs, la réalisation particulière d'une installation suivant l'invention telle qu'elle est illustrée par les figures, s'intéresse à une saisie d'images tridimensionnelles. C'est pourquoi l'appareillage de visiométrie est constitué d'une manière analogue à ce qui a été décrit dans une demande de brevet antérieure de la déposante FR 2 929 481, avec deux caméras de prise de vue 16 et 17 fonctionnant en coopération avec la même source laser 11 et orientées vers la trace d'éclairage par faisceau laser de part et d'autre de la source émettrice. L'exploitation des signaux d'images numériques utilise des moyens en eux-mêmes classiques pour fournir des informations de hauteur au dessus d'un niveau de référence lié au plan normal de convoyage, en plus des informations de localisation de chaque pixel d'image en abscisse et ordonnee dans le plan de base des produits.

En caractéristique propre à la présente invention, il vient le fait que la visiométrie dite tridimensionnelle est mise à profit pour vérifier la planéité des plaques de cuisson. On sait que les plaques de cuisson sont capables d'être réutilisées un bon nombre de fois pour cuisson de séries de pains successives, mais qu'elles deviennent inutilisables quand, à force d'étapes de chauffage et refroidissement, elles se sont déformées, notamment en prenant de la flèche. En pratique, toute déformation de la plaque risque de conduire à des produits qui peuvent être refusés par la clientèle pour des questions de forme ou de régularité de cuisson.

La vérification de la planéité de chaque plaque passe par une détection de la hauteur des plats entre alvéoles au-dessus du niveau de référence. Par des traitements de données d'images utilisant des moyens informatiques en eux-mêmes classiques, on peut notammert configurer le système pour détecter le niveau d'un plat 51 entre deux alvéoles 52 (voir figure 4A) en différents endroits de la plaque, notamment en ses quatre angles 53, 54, 55 et 56 (voir figure 4), le cas échéant en d'autres points de la plaque, par exempte sur ses bords en bout des alvéoles comme en 57 et 58. Les calculs du système informatique permettront d'en déduire le degré de flèche que peut présenter la plaque, de comparer la valeur obtenue à une valeur de tolérance prédéterminée, pour décider automatiquement si la plaque correspondante peut être renvoyée vers le four de cuisson ou si elle doit être éliminée du circuit.

Il est à noter ici que c'est également à partir d'ure information de hauteur, portant cette fois sur les produits cuits présents dans les alvéoles, que l'on peut déterminer la hauteur propre à chaque pain en chaque point, puisque la profondeur des alvéoles par rapport aux plats 51 est connue de construction.

Au cas où cela ne ressortirait pas de manière suffisamment claire des explications précédentes, soulignons ici que les plaques successives sont amenées les unes après les autres par e convoyeur 4 pour être immobilisées dans le poste de visiométrie par arrêt automatique du convoyeur quand une nouvelle plaque arrive Jusqu'à une butée appropriée.

Conformément à une caractéristique propre à l'invention, l'installation est construite de manière à commander automatiquement la destination de chaque plaque en fonction résultat de la vérification de planéité effectuée au niveau du poste de visiométrie 1. Toute plaque jugée inutilisable est éliminée du circuit de retour des plaques vers une nouvelle étape de cuisson, qui pour les autres plaques est assuré par un convoyeur 5 situé en dessous du convoyeur 4 parallèlement à celui-ci, mais avec entraînement en sens inverse.

Le transfert des plaques jugées correctes est effectué par un ascenseur schématiquement représenté en 59, qui reçoit chaque plaque pleine à sa sortie du poste de vision 1 et qui la maintient au niveau haut du convoyeur 4 pendant le temps nécessaire à l'extraction des produits contenus dans les alvéoles par le système de transfert 3, pour la descendre ensuite au niveau bas du convoyeur de retour 5 et la faire passer sur celui-ci, dès lors qu'il s'agit d'une plaque non jugée défectueuse. Naturellement toutes les commandes correspondantes sont automatiquement synchronisées avec les autres opérations assurées par l'installation.

Comme on l'a déjà indiqué et conformément à une caractéristique propre à l'invention, l'extraction des produits est effectuée par une collection de préhenseurs 31 qui sont ici du type pneumatique à ventouses, Chaque préhenseur fonctionne comme une ventouse automatiquement pilotée dans le sens de l'aspiration pour saisir le produit situé sous elle pour ensuite le libérer sous l'effet d'un jet d'air.

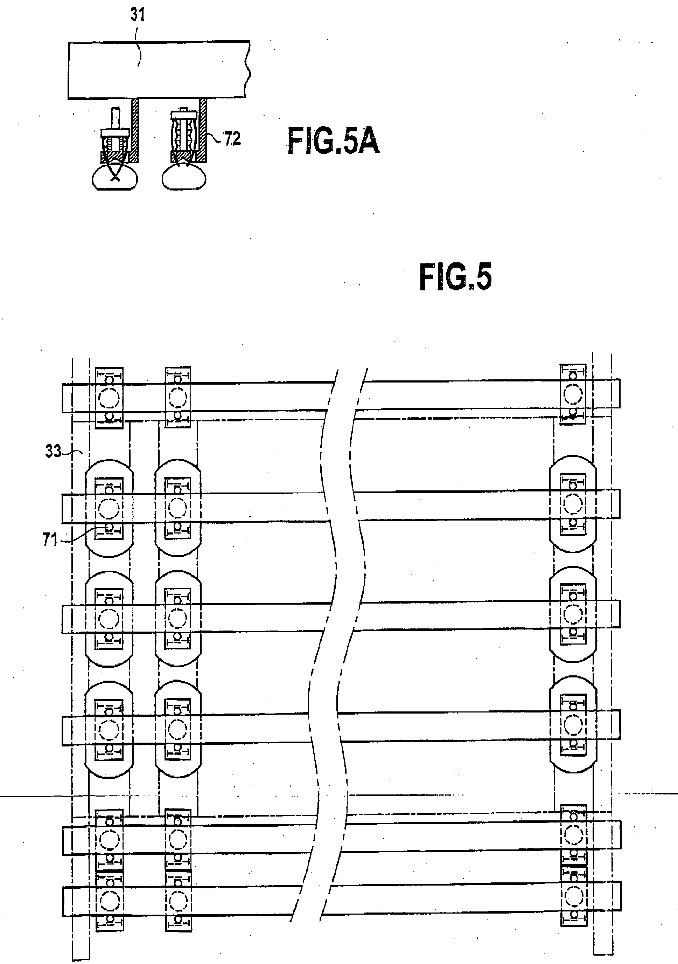

Dans la réalisation particulière de la figure 1, comme d'ailleurs dans celle de la figure 5, les préhenseurs 31 sont répart's par série, avec pour chaque série une disposition en ligne transversalement à la direction de convoyage, chaque série étant montée sur un barreau tel 32. Les différents barreaux 32 sont montés mobiles sur deux longerons 33, ce qui permet d'adapter le nombre de préhenseurs sur chaque colonne surplombant les pair s sur leur longueur en fonction de la largeur des plaques ou en fonction du nombre de points de préhension désirés dans leur répartition sur la longueur des alvéoles.

L'ensemble de la matrice de préhension ainsi constituée fait partie du système de transfert 3. Elle est à cet effet montée sur un chariot 35 qui est mobile en translation sur des rails de guidage 36 et 37 sur lesquels il repose par des galets 38. L'ensemble du chariot portant la matrice de préhension est entraîné par l'intermédiaire d'un bras porteur 39 par des moyens de motorisation (non représentés) qui sont placés sous la commande du système de pilotage automatique de l'ensemble de l'installation.

Pour chaque plaque de cuisson chargée qui est passée par le poste de vison 1, les différents préhenseurs sont commandés pour saisir tous les produits présents dans les alvéoles pendant que le système 3 est maintenu stationnaire au-dessus de la plaque retenue au niveau haut de l'ascenseur 59. On notera ici que du fait que les produits cuits moulés sont rangés dans leurs alvéoles respectives, le nombre de préhenseurs peut être très sensiblement réduit par rapport au nombre qui serait nécessaire pour saisir des produits en disposition aléatoire sur une bande de transport.

C'est au niveau de la libération des produits que les préhenseurs sont diversement commandés en fonction des résultats des comparaisons effectuées pour distinguer les produits conformes aux exigences de qualité de ceux qui ne le sont pas. Après déplacement du système de préhension 3, les produits jugés conformes sont libérés au-dessus d'un convoyeur de sortie 6. Ils sont reçus là sur une bande de transport 61 qui les entraîne en direction perpendiculaire au convoyeur principal 4. Dans des cas d'application courants en fabrication industrielle, ils sont orientés vers un surgélateur pour être congelés avant livraison. Les produits jugés non conformes aux exigences de qualité sont quant à eux entraînés un peu plus loin sur le circuit des rails 36 et 37, pour être déposés dans un bac d'évacuatian 63.

Les produits suspendus au système de transfert 3 traversent le poste de visiométrie 2 avant d'arriver en position pour être déposés sur le convoyeur de sortie 6. Ils sont là examinés par e dessous par une caméra laser 21 montée sur une traverse 22 ce l'installation (sur la figure 1). A ce niveau, on préfère en général utiliser une simple caméra linéaire, qui examine les différent; produits en parallèle, chacun au fur et à mesure de son passage au-dessus de son champ de vision. A ce niveau également, une information de surface est en général suffisante pour juger correctement du caractère conforme ou non de chaque produit, dans la mesure où l'information vient en complément des informations qu ont déjà été enregistrées à partir d'images numériques acquises au niveau du premier poste de visiométrie 1.

Dans nombre de cas d'application pratique, on prévoiera par exemple de vérifier le respect d'exigences de qualité concernant la présence, la forme, le nombre de scarifications au niveau du poste de visiométrie par au-dessus 1, alors que l'on s'intéressera plutôt à la présence de taches anormales en sous-face des pains au niveau du poste de visiométrie par en dessous 2. Par ailleurs, dans le mode de mise en oeuvre de l'invention choisi pour exemple, on a prévu avantageusement d'exploiter les données d'image des premières opérations de visiométrie (visiométrie par le dessus, dans le premier poste visiométrique 1, quand les produits sont encore dans les plaques de cuisson, avant leur saisie pour transfert vers la sortie de l'installation) pour en déduire des informations de localisation servant au pilotage des préhenseurs individuels, cependant que les données d'image des secondes opérations de visiométrie (par examen visiométrique par le dessous dans le second poste 2) sont exploitées pour vérifier que chaque produit extrait de la plaque soit présent dans le système de transfert. Diverses informations de qualité peuvent être déduites d'images obtenues dans l'un et l'autre des postes de visiométrie, notamment des variations d'intensité colorée traduisant le degré de cuisson, la densité de grains décorant le dessus des pains, la présence de taches laissées par des résidus de cuissons antérieures restés au fond des moules, des lacunes de cuisson dues à des défauts de la pâte ou à des points de chauffe dans le four.

On passera maintenant à la description d'une variante de réalisation de l'installation qui, conformément à l'invention, répond à des caractéristiques propres au niveau du système de transfert des produits entre le poste de visiométrie par au-dessus et le circuit de sortie pour passer au-dessus du système de visiométrie par en dessous. Cette variante de réalisation est adaptée spécifiquement à des produits qui ne sont pas encore durcis, ni par cuisson ni par congélation. II s'agit donc notamment de pains sortant des fours de cuisson à l'état cuit ou semi-cuit, dont la mie reste molle.

Alors que les préhenseurs à ventouses sont particulièrement adaptés à des produits à surface rigide au moins sur leur surface supérieure, comme le sont notamment des produits qui sont passés par une étape de congélation tout en étant maintenus rangés dars les alvéoles d'une plaque analogue aux plaques de cuisson, à l'inverse on préfère ici, conformément à l'invention, avoir recours à des préhenseurs à aiguilles quand les produits sont supposés être souples dans leur masse.

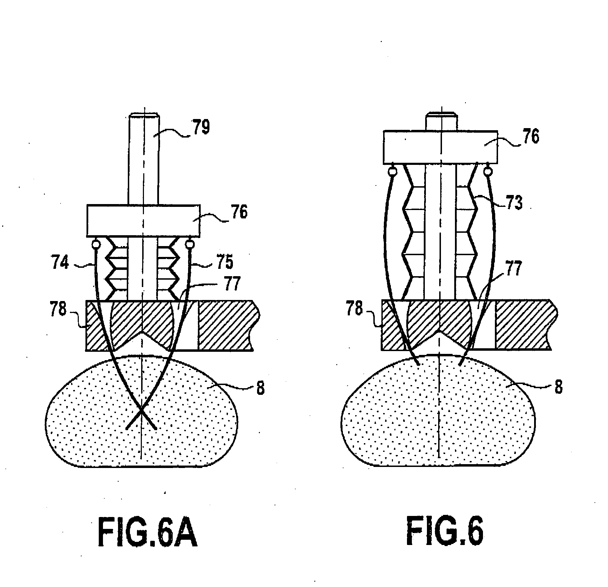

On voit ainsi sur la figure 5 une matrice de préhension où les mêmes barreaux 32 que sur la figure 1 portent chacun une série de préhenseurs individuels à aiguilles 71, chacun constitué comme il apparaît mieux des figures 6A et 6B. Dans le cas particulier représenté, chaque préhenseur est fixé sous le barreau 31 correspondant par une potence 72. Dans d'autres cas d'application on peut prévoir que leur position soit réglable sur le barreau support correspondant pour adapter leur position de manière à les placer chacun au-dessus d'une alvéole de la plaque en cours de démoulage. Les différents barreaux 32 sont eux montés mobiles sur des longerons 33 de la même manière que dans le mode de réalisation précédent.

On a illustré sur la figure 5 que pour organiser la saisie des pains correspondant à des tiers de baguettes, avec trois pains par alvéole, on a prévu d'utiliser seulement trois lignes de préhenseurs. Les préhenseurs utilisés sont portés par trois des barreaux 31, les autres barreaux étant écartés de part et d'autre de la zone à couvrir au-dessus de la plaque en cours.

Les figures 6A et 6B illustrent des caractéristiques propres à l'invention concernant la constitution des préhenseurs à aiguilles tels qu'ils sont utilisés de préférence dans l'installation de contrôle de qualité choisie pour exemple. Un préhenseur à aiguilles individuel y est représenté en figure 6A dans sa position de saisie d'un pain 8 alors que sur la figure 6B il est représenté dans la position qu il prend au moment de la libération du même pain 8.

La saisie du pain s'effectue par deux aiguilles courbes qui pénètrent à l'intérieur du pain en se croisant. Les deux aiguilles 74 et 75 sont à cet effet montées articulées sous une platine support 76 symétriquement courbées l'une vers l'autre. Chacune est libre de son orientation autour de son axe d'articulation, Elle est par contre guidée à son autre extrémité de telle sorte que lorsque le préhenseur est commandé pour soulever la platine 76, les deux aiguilles s'écartent l'une de l'autre en sortant du pain 8. Le guidage est assuré dans deux ouvertures 77 creusées à travers une platine inférieure 78 qui est solidaire de la potence 72 fixant le préhenseur r à son barreau support. Les ouvertures 77 sont de préférence limitées par des faces courbées comme les aiguilles, pour assurer sans heurt le guidage de ces dernières.

Le préhenseur passe automatiquement de l'une à l'autre de ses positions fonctionnelles telles qu'illustrées par les figures 6A et 6B. A cet effet, la platine supérieure 76 est montée libre en coulissement sur un axe de guidage 79 qui est solidaire de la platine inférieure 78. Entre les deux platines une enveloppe à soufflet 73 enferme un coussin d'air qui autorise leurs déplacement relatifs. La pression dans le coussin d'air varie, individuellement pour chaque préhenseur, sous la commande du système de pilotage de l'ensemble. Elle détermine la hauteur entre les deux platines, Autrement dit, chacun organe de commande en sortie ou retrait des aiguilles fonctionne comme un vérin pneumatique. Quand l'ensemble de préhension est abaissé sur les pains présents sur la plaque en cours de traitement, le pilotage commande le rapprochement de a platine supérieure 76 vers la platine inférieure 78 et les deux aiguilles pénètrent dans le pain situé en dessous. Quand l'ensemble remonte en sens inverse, les aiguilles se dégagent du pain et la platine 76 est sollicitée pneumatiquement à s'éloigner de la platine 78 en cours de montée.

La description qui précède expose de manière détaillée comment l'invention est avantageusement mise en oeuvre dans le cadre du contrôle de qualité portant sur des pains présents dans les alvéoles des plaques telles que des plaques de cuisson, comment on procède à deux examens de visiométrie successifs, l'un par un système de saisie d'images numériques examinant les pains par le dessus, l'autre les examinant par le dessous après déplacage, alors qu'ils sont suspendus à un système de transfert à préhenseurs multiples individuellement pilotés, comment on vérifie la planéité des plaques par la même visiométrie par le dessus, comment enfin on utilise avec avantage des préhenseurs à aiguilles pour la saisie do pains qui, venant de cuisson, ne sont pas durs.

Dans des variantes de mise en oeuvre de l'invention moins usuelles que celles faisant intervenir des plaques de moulage à alvéoles servant de plaques de cuisson, les mêmes opérations de visiométrie, saisie par préhenseurs, commande automatique, peuvent s'effectuer sur des produits qui sont présents en des emplacements respectifs sur des plaques de moulage ou de cuisson qui ne sont pas matérialisés par des alvéoles véritablement formées en creux dans les plaques, comme si lesdites alvéoles avaient une hauteur nulle.

## Revendications

1. Procédé de contrôle de qualité dans une installation de boulangerie industrielle, suivant lequel on soumet des produits de boulangerie encore présents dans leurs emplacements respectifs sur une plaque de moulage à un examen de visiométrie par le dessus fournissant des informations d'imagerie numérique as moins quant à leur localisation sur la plaque correspondante, pour commander automatiquement leur saisie au moyen de différents préhenseurs d'une matrice de préhenseurs, et on les soumet à un autre examen de visiométrie qui est effectué partie dessous alors que les produits sont suspendus à la matrice de préhenseurs.

2. Procédé suivant la revendication 1, suivant lequel on assure la commande des différents organes de préhension de ladite matrice en libération des produits qu'ils ont saisis, par pilotage automatique en fonction d'informations de localisation, de présence, de qualité, obtenues par traitement des différents signaux caractéristiques des images numériques acquises lors des examens de visiométrie, en orientant les différents produits vers des circuits différents suivant qu'ils respectent ou non des exigences de qualité prédéterminés.

3. Installation de boulangerie industrielle comportant des moyens d'examen visiométrique de produits de boulangerie disposés sur une plaque de moulage fournissant des informations d'imagerie numérique les concernant, ainsi que des moyens de commande automatique de leur saisie au moyen de différents préhenseurs d'une matrice de préhenseurs (3), dans laquelle lesdits moyens d'examen visiométriqué comportent un poste d'examen visiométrique par le dessus (1) examinant les produis alors qu'ils sont encore présents dans leurs emplacements respectifs sur ladite plaque de moulage et fournissant des informations d'imagerie numérique au moins quant à leur localisation sur la plaque correspondante pour servir auxdits moyens de commande automatique de leur saisie, et un poste d'examen visiométrique par le dessous (2) examinant les produite ainsi saisis alors qu'ils, sont suspendus à la matrice de préhenseurs.

4. Installation suivant la revendication 3, dans laquelle le poste d'examen visiométrie (1) par le dessus comporte des moyens d'entraînement (12, 13) d'une caméra numérique (16, 17) en balayage au-dessus de la plaque en cours de traitement (15).

5. Installation suivant la revendication 4, dans laquelle la caméra numérique (16, 17) utilisée pour l'examen de visiométrie par le dessus est une caméra d'acquisition d'images tridimensionnelles.

6. Installation suivant l'une des revendications 3 à 5, dans laquelle l'examen visiométrique par le dessous est effectué au moyen d'une caméra (21) linéaire montée en position fixe au-dessus de laquelle se déplace ladite matrice de préhenseurs pour transférer les produits saisis hors de portée de la plaque d'où ils ont été extraits.

7. Installation suivant la revendication 3 et, éventuellement, l'une ou l'autre des revendications qui en dépendent, dans laquelle ladite matrice de préhenseurs est équipée de préhenseurs à ventouses (31) pilotés individuellement

8. installation suivant la revendication 3 et, éventuellement, l'une ou l'autre des revendications qui en dependent, dans laquelle ladite matrice de préhenseurs est équipée de préhenseurs à aiguilles (71) pilotés individuellement.

9. Installation suivant la revendication 8, dans laquelle lesdits préhenseurs à aiguilles (71) sont à pilotage pneumatique.

10. Installation suivant la revendication 9, dans laquelle ledit pilotage commande un déplacement relatif entre une platine (76) de montagne articulé de deux aiguilles en vis à vis (74, 75) et une platine (78) à travers laquelle lesdites aiguilles sont guidées dans des ouvertures respectives (77).

11. Installation suivant la revendication 3, et éventuellement l'une ou l'autre des revendications qui en dépendent, dans laquelle le poste de visiométrie par le dessus (1) assure une vérification de la planéité des plaques (15) par une détection de la hauteur des plats disposés entre les alvéoles qui sont formées dans lesdites plaques pour définir lesdits emplacements desdits produits, de manière à déterminer si chaque plaque (15) est réutilisable ou non pour une nouvelle opération de moulage.

12. Installation suivant la revendication 19, comportant des moyens (59) pour commander automatiquement le transfert de chaque plaque vide de produits dont la planéité a été vérifiée non défectueuse sur un convoyeur de retour (5) vers un four de cuisson d'où sont issus les plaques chargées de produits amenée s aux postes de visiométrique.

13. Procédé suivant la revendication 1 ou 2, s'appliquant au contrôle de qualité de produits venant d'un four de cuisson présents dans les alvéoles de plaques de cuisson suivant lequel, par examen visiométrique par le dessus, on vérifie la planéité des plaques par détection de la hauteur de plats de ladite plaque situés entre des alvéoles de réception des produits dans leu-s emplacements respectifs, et en ce que l'on en déduit, pour chaque plaque une fois vidée par saisie des produits, si elle est réutilisable ou non pour une nouvelle opération de moulage, seules les plaques dont la planéité a été vérifiée non défectueuse étant renvoyées vers le four de cuisson.
